# FASCICULE DE BREVET EUROPEEN

(11) **EP 3 237 788 B1**
(45) Date de publication et mention de la délivrance du brevet: **04.03.2020**
(21) Numéro de dépôt: 15821090.6
(22) Date de dépôt: 24.12.2015
(51) Int. Cl.: F16L 37/14, F16L 37/56

(54) **ADAPTATEUR DE TEST OU DE REMPLISSAGE**
TEST- ODER FÜLLADAPTER
TEST OR FILLING ADAPTER

(30) Priorité: 24.12.2014 FR 1463345
(43) Date de publication de la demande: 01.11.2017
(73) Titulaire: Fives Filling & Sealing, 44140 Le Bignon (FR)
(72) Inventeur: ORY, Guillaume, 44300 Nantes (FR); MARTIN, Denis, 44340 Bouguenais (FR)
(74) Mandataire: Lavoix
(86) Numéro de dépôt international: PCT/EP2015/081249
(87) Numéro de publication internationale: WO 2016/102710

(56) Documents cités:
- EP-A1- 0 168 333
- EP-A1- 0 682 203
- US-A- 3 673 541
- US-A1- 2014 112 699

## Description

La présente invention concerne un adaptateur de test ou de remplissage destiné à transférer un ou plusieurs fluides d'une machine de test ou de remplissage vers un circuit fluidique. Elle trouve notamment une application lors du transfert de fluides tels que du liquide de refroidissement, du liquide de frein, du fluide de climatisation, pour le circuit correspondant d'un véhicule, lors du test ou du remplissage d'un tel circuit, par exemple sur une chaîne d'assemblage automobile, ou encore dans le secteur de l'énergie pour le remplissage des pompes à chaleur, ou de radiateurs électriques à fluide.

US 2014/112699 décrit un connecteur comprenant une première partie et une deuxième partie équipées d'ensembles de connexions, et des moyens d'assemblage.

EP 0 682 203 décrit un dispositif d'accouplement comprenant un arbre, un manchon extérieur, un manchon intérieur, et une goupille de verrouillage.

Le ou les fluides peuvent être des mélanges de fluides, comme dans le cas d'un mélange caloporteur de type eau/glycol, ou d'un mélange obtenu par injection successive d'un premier fluide tel qu'une huile de type polyalkylène glycol (PAG) puis d'un deuxième fluide tel qu'un fluide frigorigène comme le tétrafluoroéthane (R134A).

Sur les chaines automobiles, il faut toujours pouvoir disposer de fluides pour remplir les différents circuits des véhicules en cours d'assemblage sur la chaine de production. L'adaptateur est un outil spécifique qui se connecte au circuit fluidique de façon étanche, dans la plupart des cas, via une connexion temporaire, automatique ou manuelle, intégrant des éléments hydrauliques et pneumatiques de façon à assurer une liaison fluidique entre l'unité de remplissage et le circuit à remplir. L'opérateur utilise l'adaptateur lors du remplissage ou test de chaque circuit du véhicule : il se doit donc d'être robuste, léger, ergonomique... malgré cela, il reste un outil vulnérable et il doit pouvoir être réparé ou changé très rapidement sans arrêter la chaine de production et sans pollution de la zone de travail lors de sa réparation ou de son changement.

Actuellement, les adaptateurs équipant les chaînes d'assemblage sont liés d'une façon monobloc à une longue gaine reliant l'adaptateur manipulé par l'opérateur à la machine de test ou de remplissage. En variante, il n'existe pas une gaine en tant que telle mais un faisceau de conduits fluidiques et de câbles électriques tenus ensemble.

Pour simplifier la description de l'invention, nous décrirons par la suite une configuration avec une gaine, sachant que par gaine, on entend tout aussi bien une gaine formant un fourreau à l'intérieur duquel peuvent courir des câbles et conduits, qu'un faisceau comprenant des câbles et/ou conduits maintenus ensemble.

La gaine est liée au réservoir de la machine de test ou de remplissage par un système de connecteurs fluidiques plus ou moins rapides à déconnecter. De plus, cette gaine est généralement reprise par des systèmes de tenseurs pour ne pas frotter au sol, ou des systèmes anti-arrachement qui détectent une tension trop forte de la gaine entre le véhicule et la machine de test ou de remplissage.

Ces systèmes liés à la gaine sont longs à déconnecter lorsqu'il est nécessaire de démonter l'adaptateur. De plus, ce sont des éléments de sécurité qui nécessitent de vérifier leur fonctionnement avant de redémarrer l'installation.

L'invention a donc pour objet de palier notamment ces problèmes. Elle a pour objet un système de liaison rapide, léger et étanche qui est intégré à l'adaptateur et assure la liaison et l'isolement à la gaine. Selon l'invention, l'adaptateur comprend une partie solidaire de la gaine (bloc de liaison) permettant d'assurer la liaison ou l'isolement de ladite gaine avec le reste de l'adaptateur. La gaine n'étant pas un élément soumis aux mêmes contraintes que l'adaptateur, elle s'use peu et peut être renforcée mécaniquement, il n'est pas nécessaire de la remplacer fréquemment.

Selon l'invention, seul l'adaptateur est démonté, sans la gaine, lorsque cela est nécessaire, au lieu d'un système encombrant et lourd comprenant la gaine et son dispositif de raccordement à la machine de test ou de remplissage.

Ainsi, l'invention présente un système de liaison rapide et sécurisé assurant l'étanchéité pour ne pas souiller la zone de travail de l'opérateur. En effet, des fluides comme de l'huile moteur peuvent vite rendre une zone de travail glissante et donc dangereuse pour l'opérateur travaillant dans ladite zone.

Le nouvel adaptateur selon l'invention est composé de quatre sous-ensembles principaux :
- Un bloc de liaison lié à la gaine intégrant une partie du système de liaison rapide ainsi que l'obturation des lignes de fluide pour éviter la pollution de la zone de travail
- Le corps de l'adaptateur qui peut notamment comprendre une poignée de manipulation de l'outil par l'opérateur et la partie complémentaire du système de liaison rapide. Le corps de l'adaptateur peut être coudé ou droit en fonction de l'accès au circuit fluidique à tester ou remplir. Il peut aussi intégrer un grip antidérapant et souple sur la surface utilisée comme poignée afin d'améliorer la préhension de l'outil par l'opérateur. Ce corps peut aussi intégrer des éléments tels que des vannes pilotées ou des capteurs dédiés au process même de test ou de remplissage. Ces vannes peuvent être pilotées électriquement ou pneumatiquement.
- Une interface opérateur permettant en particulier le démarrage, l'arrêt des cycles opératoires ainsi que des fonctions complémentaires (état du cycle, machine opérationnelle ou en défaut...) permettant à l'opérateur d'éviter des allers-retours inutiles jusqu'au pupitre de commande de la machine de test ou de remplissage,
- Un bloc de verrouillage appareillé à la géométrie du connecteur présent sur le circuit fluidique à tester ou remplir.

Selon l'invention, l'adaptateur est un outil de test ou de remplissage d'un fluide d'un circuit fluidique, ledit adaptateur venant se raccorder audit circuit fluidique et étant relié par une gaine ou un faisceau à une machine de test ou de remplissage délivrant le fluide, l'adaptateur et la gaine comprenant des conduits pour les fluides et des conduits pour le pilotage pneumatique d'organes de l'adaptateur ainsi qu'un faisceau électrique reliant l'interface de contrôle/commande de l'adaptateur à la machine.

L'adaptateur comprend deux parties, la partie assurant une liaison entre la gaine ou un faisceau et la partie venant se raccorder sur le circuit fluidique,

Ladite liaison comprend un ensemble de connexions assurant la continuité en fonctionnement des conduits et la séparation sans purge préalable desdits conduits lors des phases de maintenance,

La partie comprend également un moyen dont la commande assure simultanément soit le maintien mécanique de la liaison et la continuité fluidique des conduits, soit la rupture de la liaison et l'isolement simultané d'au moins un conduit.

Ainsi, l'adaptateur selon l'invention permet de changer rapidement l'ensemble corps / interface / bloc de connexion. Ce changement peut être utilisé dans le but d'une maintenance plus rapide. Il peut aussi être utilisé dans le cas de changement de production (changement de connexion sur le circuit fluidique). En effet, la modularité de cet adaptateur permet, par exemple, de changer rapidement d'un adaptateur coudé avec un système de verrouillage à griffes sur le circuit fluidique, à un adaptateur droit avec un autre système de verrouillage sur un circuit fluidique différent. La seule contrainte est que le fluide soit le même ou compatible, (sinon, il serait nécessaire de purger le fluide présent dans la gaine.

L'invention permet aussi de supprimer les platines de connexion rapide à l'interface gaine/machine de test ou de remplissage, souvent couteuses, d'accessibilité réduites et sources de perte de charge (donc de limitation de débit et de capacité de production) qui sont parfois installés entre la gaine et la machine de test ou de remplissage.

L'adaptateur selon l'invention, comprend un réceptacle solidaire de la partie dans lequel vient se positionner un pion solidaire de la partie dont l'actionnement assure simultanément soit le maintien de la liaison et la continuité fluidique des conduits, soit la rupture de la liaison et l'isolement simultané d'au moins un conduit. La géométrie du pion permet un assemblage rapide, type quart de tour, via un assemblage circulaire avec méplat via une gorge. Cependant, d'autres types d'assemblage peuvent être utilisés.

L'avantage d'un système « quart de tour » est qu'il nécessite un outil simple pour être déconnecté. L'opérateur ne risque donc pas de faire une déconnexion de façon inopportune. L'empreinte du pion permettant de manœuvrer le système quart de tour peut être de forme simple, par exemple une fente droite opérable par un tournevis plat, ou être de forme plus complexe, de façon à avoir un outillage dédié permettant de réserver cette opération uniquement au personnel de maintenance et non à l'opérateur travaillant sur cette zone.

Selon un exemple de réalisation de l'invention, dans le système d'assemblage entre le corps de l'adaptateur et le bloc de liaison avec la gaine, le pion comprend deux méplats parallèles situés symétriquement de part et d'autre de son axe, le réceptacle comprenant un passage dans lequel est glissé le pion au niveau des méplats lorsque ceux-ci sont positionnés parallèlement audit passage, ledit pion étant ensuite positionné dans une réservation cylindrique du réceptacle et mis en rotation d'un quart de tour pour maintenir la liaison et assurer la continuité fluidique des conduits. Ce type de connexion mécanique est robuste, fiable et étanche.

L'ouverture peut se faire par la droite ou/et par la gauche de l'adaptateur.

Ce système n'est pas sensible aux vibrations, ne laisse pas passer la salissure et résiste aux efforts de traction (liaison gaine-adaptateur). De plus, en plaçant l'isolation proche des éléments hydrauliques embarqués pour le process, le volume de fluide résiduel est faible et évite ainsi une vidange de l'ensemble des liaisons fluidiques contenues dans la gaine.

Avantageusement le pion est relié à un conduit et actionne un mécanisme d'ouverture/fermeture dudit conduit lors de la mise en rotation d'un quart de tour. Le mécanisme d'ouverture/fermeture utilise, par exemple, une vanne à boisseau sphérique.

En plus de ce système qui assure la liaison mécanique et l'isolation des conduits pour les fluides, le système intègre une déconnexion rapide sans isolation pour les conduits de pilotage pneumatique par exemple.

Néanmoins, si le nombre de connexions totales est important, la force demandée à l'opérateur pour les opérations de liaison peut être importante. Dans ce cas, les connexions assurant la continuité en fonctionnement des conduits et la séparation desdits conduits sont réparties en au moins deux points distants dans la direction de la course d'emboitement du corps et du bloc de liaison et en ce que l'étanchéité des connexions sont réalisées successivement dans les au moins deux points distants. L'effort nécessaire pour réaliser la liaison entre le corps et le bloc de liaison est donc divisé par le nombre de points distants. Un guidage mécanique (pions de positionnement, axe de guidage...) peut être ajouté en fonction de la longueur de guidage nécessaire pour améliorer l'ergonomie et la tenue mécanique générale de l'ensemble.

Selon l'invention, l'adaptateur peut comporter également une interface opérateur, facilement remplaçable, sur le corps de l'adaptateur. Cette interface opérateur permet le contrôle des cycles opératoires et permet également de visualiser le nombre de cycles effectués avec l'adaptateur, de vérifier la présence du module de verrouillage... Cette interface a une grande importance dans la gestion de la maintenance technique de l'adaptateur et dans la facilité d'utilisation de celui-ci par l'opérateur.

Ainsi, l'invention a pour objet, selon un premier aspect, un adaptateur de remplissage d'un fluide d'un circuit fluidique, destiné à être connecté d'une part audit circuit fluidique et d'autre part à une machine de remplissage par une gaine comprenant au moins un conduit d'alimentation en fluide relié à la machine de remplissage et au moins un conduit d'alimentation pour le pilotage relié à une source d'alimentation en en énergie pour le pilotage, l'adaptateur comprenant au moins un conduit de transfert de fluide destiné à être connecté au conduit d'alimentation et au moins un conduit de pilotage d'un ou plusieurs organes de l'adaptateur, notamment un ou plusieurs organes de régulation du débit de fluide, destiné à être connecté au conduit d'alimentation pour le pilotage..

L'adaptateur comprend une première partie apte à être raccordée à la gaine, et une deuxième partie, distincte de la première partie, apte à être raccordée sur le circuit fluidique, ainsi que des moyens d'assemblage des première et deuxième parties.

Les première et deuxième parties comprennent respectivement un premier et un deuxième ensembles de connexions, aptes à être connectés en sorte d'assurer la continuité fluidique en fonctionnement, c'est-à-dire l'adaptateur connecté à la machine de remplissage, d'une part des conduits de transfert et d'alimentation et d'autre part des conduits de pilotage et d'alimentation pour le pilotage.

Les premier et deuxième ensembles de connexions sont également aptes à être déconnectés en sorte d'assurer, lorsque la deuxième partie est déconnecté de la première partie, tel que lors de phases de maintenance, la séparation fluidique d'une part des conduits de transfert et d'alimentation et d'autre part des conduits de pilotage et d'alimentation pour le pilotage.

Les moyens d'assemblage sont aptes à être assemblés en sorte d'assurer soit la connexion entre les première et deuxième parties et simultanément la continuité fluidique entre les premier et deuxième ensembles de connexion, soit la déconnexion entre les première et deuxième parties et simultanément l'isolement fluidique entre les premier et deuxième ensembles de connexion.

Suivant certains modes de réalisation, l'adaptateur comprend en outre une ou plusieurs des caractéristiques suivantes, prise(s) isolément ou suivant toutes les combinaisons techniquement possibles :
- les moyens d'assemblage comprennent au moins un réceptacle solidaire de la deuxième partie et au moins un pion solidaire de la première partie, le pion étant apte à se positionner dans le réceptacle et à être actionné en sorte d'assurer soit la connexion entre les première et deuxième parties et simultanément la continuité fluidique entre les premier et deuxième ensembles de connexion, soit la déconnexion entre les première et deuxième parties et simultanément l'isolement fluidique entre les premier et deuxième ensembles de connexion ;
- le pion et le réceptacle sont aptes à permettre un assemblage par verrouillage de type quart de tour dudit pion dans ledit réceptacle ;
- le pion présente un axe principal et comprend au moins un méplats, de préférence deux méplats parallèles situés symétriquement de part et d'autre de son axe principal, et le réceptacle comprend un passage formé selon une direction d'insertion et débouchant dans une réserve cylindrique, en sorte de permettre l'introduction du pion dans la réserve cylindrique par passage aller du ou des méplats dans le passage parallèlement à la direction d'insertion jusqu'à la réserve cylindrique, et en sorte de permettre le verrouillage du pion dans la réserve cylindrique par rotation du pion d'un quart de tour pour amener le ou les méplats perpendiculairement à la direction d'insertion et empêcher le passage retour du ou des méplats dans le passage ;
- le pion est relié à un moyen de type vanne placé sur le conduit d'alimentation en fluide ou, éventuellement sur le conduit d'alimentation de pilotage lorsque le fluide de pilotage est un fluide de pilotage pneumatique, de sorte que l'actionnement du pion dans le réceptacle entraîne l'ouverture ou la fermeture du moyen de type vanne ;
- le pion est relié à un moyen d'interruption électrique placé sur le conduit d'alimentation pour le pilotage lorsque celui-ci est de type électrique, de sorte que l'actionnement du pion dans le réceptacle entraîne l'ouverture ou la fermeture du moyen d'interruption ;
- le pion est relié au moyen de type vanne ou au moyen d'interruption en sorte que le verrouillage par quart de tour du pion dans le réceptacle entraîne l'ouverture du moyen de type vanne ou du moyen d'interruption, et le déverrouillage par quart de tour inverse du pion dans le réceptacle entraîne la fermeture du moyen de type vanne ou du moyen d'interruption ;
- l'assemblage des première et deuxième parties par les moyens d'assemblage est apte à être réalisé selon une direction d'assemblage, le premier et le deuxième ensembles de connexions comprennent respectivement deux premiers et deux deuxièmes points de connexion distants, et les deux premiers et/ou deuxièmes points de connexion sont décalés dans la direction d'assemblage en sorte que l'étanchéité de chacun des deux premiers points de connexion et chacun des deux deuxièmes points de connexion correspondants soit réalisée successivement au cours de la course d'assemblage dans la direction d'assemblage, de sorte de limiter l'effort lors de l'assemblage;
- la gaine comprend au moins un faisceau d'alimentation électrique relié à une source d'alimentation électrique, et l'adaptateur comprend une interface de contrôle et de commande et au moins un faisceau de connexion électrique relié à ladite interface et destiné à être connecté au faisceau d'alimentation électrique ;
- l'interface est placée sur la deuxième partie et connectée à celle-ci au moyen d'une liaison mécanique et d'une connexion électrique rapide, en sorte d'être facilement interchangeable ;
- l'interface comprend au moins un bouton poussoir marche/arrêt, et un compteur du nombre de mise en marche/arrêt ;
- l'interface comprend un dispositif de contrôle de la présence du module d'accrochage raccordé sur la deuxième partie ;
- la deuxième partie comprend un module d'accrochage apte à être raccordé au circuit fluidique ;
- au moins un organe de régulation du débit de fluide est disposé dans le module d'accrochage de l'adaptateur ;
- les organes de l'adaptateur comprennent au moins un organe de régulation du débit de fluide à commande pneumatique, tel qu'une vanne ou un clapet pneumatique, et/ou au moins un organe de régulation du débit de fluide à commande électrique, tel qu'une vanne ou un clapet électrique, et en ce que le conduit de pilotage est un conduit de pilotage pneumatique destiné à être connecté à un conduit d'alimentation en fluide de pilotage pneumatique relié à une source d'alimentation en fluide de pilotage pneumatique, ou un faisceau de pilotage électrique destiné à être connecté à un conduit d'alimentation pour le pilotage électrique relié à une source d'alimentation électrique.

Les caractéristiques et avantages de l'invention apparaitront à la lecture de la description qui va suivre, donnée uniquement à titre d'exemple, et non limitative, en référence aux figures annexées suivantes :
- figure 1 : représentation schématique d'un système de remplissage de fluide dans une chaine d'assemblage automobile selon l'art antérieur ;
- figure 2 : représentation schématique d'un exemple d'adaptateur de test ou de remplissage selon l'invention ;
- figure 3 : représentation schématique du corps et du bloc de liaison déconnectés d'un exemple d'adaptateur selon l'invention.
- figure 4 : représentation schématique d'un exemple d'un élément de liaison participant au maintien mécanique du corps et du bloc de liaison de l'adaptateur selon d'invention ;
- figure 5 : représentation schématique selon l'invention d'un exemple de réalisation du système garantissant la liaison du corps et du bloc de liaison de l'adaptateur et l'ouverture/fermeture d'au moins deux conduits ;
- figure 6 : représentation schématique d'un exemple de réalisation du corps de l'adaptateur et de son interface opérateur selon l'invention.

Ci-après sont exposés de façon détaillée plusieurs exemples de modes de réalisation de l'invention en référence aux figures.

Les exemples de réalisation et de mise en œuvre de l'invention donnés dans la présente description concernent le secteur automobile ou énergétique mais ne sont en rien limitatifs puisque l'invention peut s'appliquer à tous les secteurs nécessitant des tests par remplissage, ou le remplissage de fluides en vue de leur transfert, notamment dans le secteur de l'énergie pour le remplissage des pompes à chaleur.

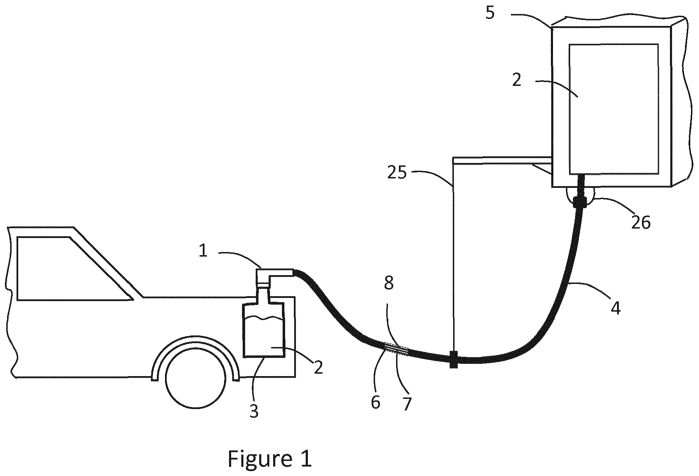

Selon l'art antérieur, la figure 1 présente, dans une chaine d'assemblage automobile une machine de remplissage 5 de fluide 2 d'un circuit fluidique 3. Un adaptateur 1 relié à la machine 5 de remplissage par une gaine 4 se connecte au circuit fluidique 3 à tester ou à remplir. Un tenseur 25 permet de maintenir la gaine 4 et un dispositif anti-arrachement 26 permet de protéger la connexion entre la gaine 4 et la machine de remplissage 5. Des conduits 6 fluidiques pour le fluide 2, des conduits 7 pour le pilotage pneumatique, et un faisceau électrique 8 se trouvent dans la gaine 4 et relient l'adaptateur 1 à la machine 5.

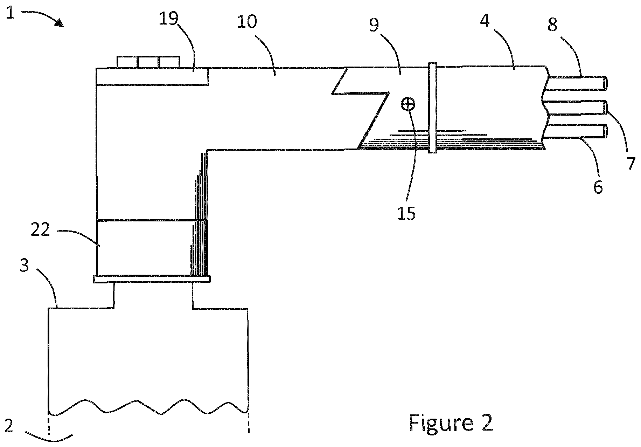

La figure 2 présente, selon un exemple non limitatif de l'invention, un adaptateur 1 comprenant :
- un bloc de liaison 9 ou première partie 9 connecté à la gaine 4, aux conduits 6, 7 et au faisceau électrique 8,
- un corps 10 ou deuxième partie 10 pouvant être de différentes formes afin de s'adapter au besoin du procédé de remplissage,
- une interface opérateur 19 permettant notamment le démarrage et l'arrêt des cycles opératoires directement depuis l'adaptateur 1; cette interface 19 peut comprendre des fonctions complémentaires telles que l'affichage de l'état du cycle et du nombre de cycles ;
- un bloc de verrouillage 22 ou module d'accrochage 22 de préférence interchangeable pour faire correspondre l'adaptateur 1 à l'embout du circuit fluidique 3.

La liaison entre le bloc de liaison 9 et le corps de l'adaptateur 10 est obtenue grâce à des moyens d'assemblage 14, 15 répartis de part et d'autre du bloc de liaison 9 et du corps 10, dont seule une partie 15 est visible sur la figure 2.

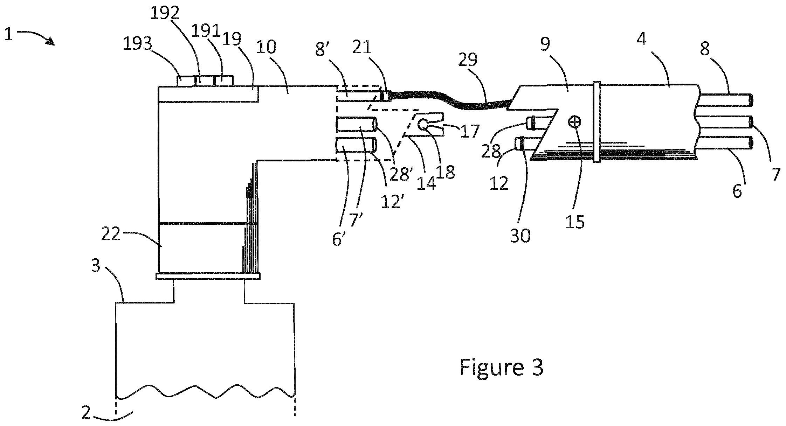

Lorsqu'on détache le bloc de liaison 9 et le corps 10 de l'adaptateur 1, comme illustré à la figure 3, on accède aux organes de connexions 12, 28 des conduits 6 et 7 du côté du bloc de liaison 9, formant un premier ensemble de connexions 12, 28 et leur pendants 12', 28' du côté du corps 10, formant un deuxième ensemble de connexions 12', 28'. Pour faciliter l'emboitement des points de connexion 12 et 12', celles-ci sont décalées dans la direction de la course d'emboitement du corps 10 et du bloc de liaison 9.

L'effort de compression sur les joints d'étanchéité 30 sera donc moindre car ces joints d'étanchéité 30 placés par exemple au niveau des points de connexion 12 et 28 et assurant l'étanchéité des connexions seront écrasés successivement et non en même temps. Dans cet exemple de réalisation de l'invention, un faisceau électrique 8 est relié au faisceau électrique 8' du corps 10 par son extrémité 29 qui vient se connecter manuellement à un connecteur 21. Dans un autre exemple de mise en œuvre, cette connexion pourrait être conçue pour se faire par le même mouvement d'assemblage que pour les connexions 12, 12' et 28, 28'.

Afin de lier le bloc de liaison 9 et le corps de 10 de l'adaptateur, la partie 15 des moyens d'assemblage 14, 15 du bloc de liaison 9 vient coopérer avec la partie 14 de ces moyens d'assemblage 14, 15 du corps 10.

Dans cet exemple les moyens d'assemblage 14, 15 comprennent notamment au moins un réceptacle ou ergot 14 solidaire du corps 10 de l'adaptateur 1.

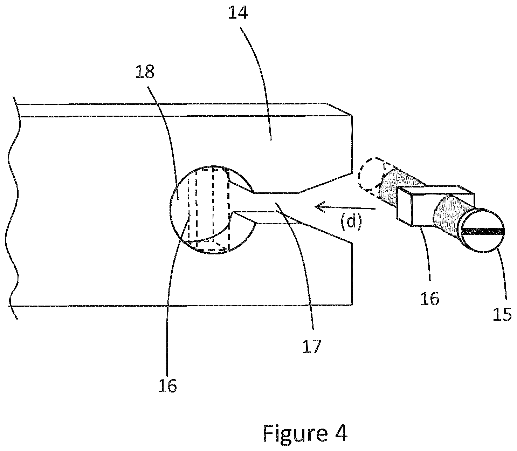

La figure 4 représente un exemple de moyen d'assemblage rapide 14, 15 selon l'invention. Celui-ci est composé d'un pion 15, également en partie visible sur les figures 2 et 3. Ce pion 15 comprend au moins un méplat 16, de préférence deux méplats 16 parallèles situés symétriquement de part et d'autre de l'axe principale du pion 15.

Le réceptacle 14 comprenant un passage 17 formé selon une direction d'insertion d, débouchant dans une réserve cylindrique 18, dans lequel est glissé le pion 15 au niveau du ou des méplats 16, lorsque celui-ci ou ceux-ci sont positionnés parallèlement à la direction d'insertion d. Le pion 15 est ainsi positionné dans la réservation cylindrique 18 du réceptacle 14, et est mis en rotation d'un quart de tour pour amener le ou les méplats 16 perpendiculairement à la direction d'insertion d, et maintient ainsi la liaison du corps 10 et du bloc de liaison 9, en empêchant le passage retour du ou des méplats dans le passage 17.

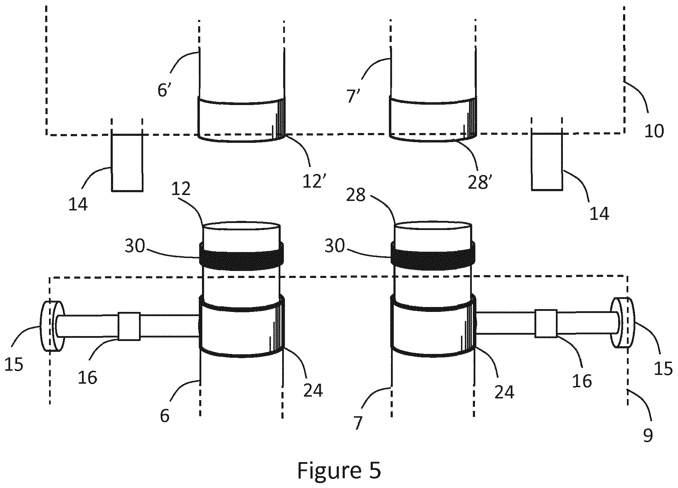

Concomitamment à l'assemblage par quart de tour, les moyens d'assemblage 14, 15 peuvent permettre de fermer ou d'ouvrir au moins une des connexion de conduits 6, 6' et 7, 7' pour assurer la continuité ou l'isolement fluidique de ces connexions de conduits 6, 6' et 7, 7'.Comme le montre la figure 5, selon une variante de réalisation, deux moyens d'assemblage 14, 15 sont mis en place de part et d'autre de l'adaptateur 1 pour faciliter la séparation du corps 10 et du bloc de liaison 9.

Chaque pion 15 est relié à un moyen de type vanne 24 placé au niveau des connexions 12, 12' des conduits 6, 6' et des connexions 28, 28' des conduits 7, 7'.

Ces vannes 24 peuvent être notamment des vannes à boisseau sphérique actionnables par quart de tour. Lorsque l'opérateur connecte le corps 10 et le bloc de liaison 9, les méplats 16 pénètrent dans les gorges ou rainures constituant les passages 17 présentés plus haut en référence à la figure 4, et viennent se loger dans les réserves cylindriques 18 correspondantes. Les connecteurs 12 et 12', et 28 et 28', s'emboitent. L'opérateur utilise alors un outil, pouvant être spécifique, pour faire tourner les pions 15 d'un quart de tour des deux côtés de l'adaptateur 1.

L'action du quart de tour bloque les méplats 16 dans les réserves cylindriques 18 assurant la liaison du corps 10 et du bloc de liaison 9 et ouvre les vannes 24 rétablissant la connexion fluidique entre le corps 10 et le bloc de liaison 9. Un quart de tour inverse permet de libérer la liaison et de fermer les vannes 24 assurant l'étanchéité de l'ensemble.

Les vannes 24 peuvent être des vannes à commande électrique, auquel cas l'action d'ouverture ou de fermeture des vannes 24 par le pion 15 peut être du type interruption électrique.

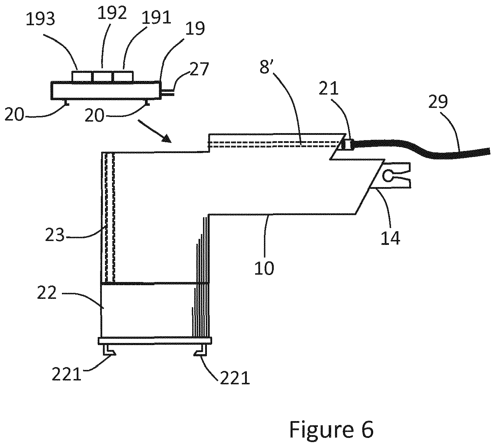

Selon un exemple de réalisation de l'invention, l'adaptateur comporte, en plus des liaisons fluidiques (de transfert ou de pilotage), une ou des liaisons 8', 21, 27 électriques pour la connexion de l'interface opérateur 19 embarquée sur l'adaptateur 1 visible notamment sur la figure 6. Cette interface opérateur 19 de contrôle/commande est placée sur la partie supérieure du corps 10 et constitue un ensemble facilement interchangeable au moyen d'une liaison mécanique 20 et d'une connexion électrique rapide 27.

Cette interface 19 peut aussi intégrer des guidages mécaniques pour l'ergonomie lors du changement, mais aussi pour améliorer l'ajustement mécanique et l'étanchéité par rapport au corps 10. En effet, pour certaines applications avec des liquides potentiellement agressifs, il peut être nécessaire que l'interface électrique 19 soit totalement étanche vis-à-vis du système rapide de connexion fluidique. Pour cela, on peut utiliser un connecteur électrique étanche (IP67). En effet, il faut garantir le bon fonctionnement de l'interface car celle-ci intègre des fonctions pouvant être « clé » comme par exemple des boutons poussoirs 191 et 192 marche/arrêt, un compteur 193 présentant le nombre de mises en marche/arrêt et un bargraphe illustrant celui-ci.

L'interface peut aussi intégrer des fonctions plus élaborées. Par exemple, la présence du bloc de verrouillage 22 peut être détectée par l'interface 19 de contrôle/commande via un dispositif 23 de contrôle de la présence dudit bloc de verrouillage 22 sur l'adaptateur 1. Cela peut avoir comme but premier de vérifier l'intégrité du système avant utilisation. Cela permet aussi de tracer un démontage dudit bloc 22 de l'adaptateur 1 et donc de vérifier les périodicités de maintenance des adaptateurs 1.

Cette détection peut être réalisée, par exemple, par un capteur de présence inductif.

L'interface 19 peut intégrer un système possédant sa propre mémoire pour enregistrer ces informations. Suite à l'analyse de celles-ci, il est possible de contrôler à quelle périodicité ont été effectués les démontages. Ces données peuvent aussi être envoyées vers un système de contrôle-commande externe, par exemple celui de la machine de remplissage 5, par exemple afin de déclencher des alarmes de maintenance en fonction du nombre de cycles effectués ou du temps de fonctionnement.

Les adaptateurs 1 selon l'invention deviennent ainsi des outils mécatroniques intégrant de l'intelligence et des fonctionnalités dédiées en fonction des applications développées sur une carte électronique embarquée. Avec ce type d'interface 19, la notion d'étanchéité et de protection de la carte électronique est d'autant plus importante qu'un contact de la carte avec le fluide 2 endommagerait la carte et provoquerait la perte des données stockées dans sa mémoire.

La configuration générale des adaptateurs 1 selon l'invention convient à une grande variété de fluides, tels que le liquide de frein, le fluide d'air conditionné ou le fluide de refroidissement. Elle est adaptée selon les spécificités de chacun.

Cependant, chaque fluide a ses particularités et nécessite un procédé dédié, en particulier en termes de process et de débit, ce qui influe directement sur le choix des composants hydrauliques intégrés à l'adaptateur et sur le nombre de liaisons fluidiques entre l'adaptateur 1 et la gaine 4.

De plus, certaines applications requièrent des spécificités telles que le fait d'embarquer un capteur (de vide par exemple) au sein de l'adaptateur 1 afin d'effectuer une mesure au plus près du circuit fluidique 3 pour éviter certaines perturbations de mesure comme la perte de la charge résultant de la longueur de la gaine 4.

Selon un exemple de mise en œuvre de l'invention, non limitatif, il est décrit ci-après un adaptateur 1 de remplissage d'un fluide 2 de liquide de frein pour automobile.

L'adaptateur 1 possède trois liaisons 6, 6' fluidiques et huit liaisons 7, 7' pneumatiques. Les trois liaisons 6, 6' fluidiques sont une arrivée en liquide 2 de frein, une ré-aspiration pour la mise à niveau du réservoir de liquide de frein 3 en fin de remplissage et un conduit de vide.

Le conduit de remplissage et le conduit de ré-aspiration sont obturés lors de la déconnexion rapide du bloc de liaison 9 et du corps 10 de l'adaptateur 1 par les moyens d'assemblage 14, 15.

Le conduit de vide n'a pas besoin d'obturation car il ne peut pas provoquer de souillage (le changement d'adaptateur 1 se fait hors cycle, le conduit de vide est isolé).

Ces trois connections rapides sont placés à l'arrière du corps 10 de l'adaptateur 1, juste entre les réceptacles 14 de verrouillage «quart de tour ». Les liaisons 7, 7' pneumatiques permettent le pilotage des vannes pneumatiques dédiées au process sont regroupées en deux points distants différents du point des liaisons fluidiques principales 6, 6' afin de limiter la force lors de la connexion/déconnexion.

Sur la face supérieure du corps 10 de l'adaptateur se trouve l'interface 19 de contrôle-commande. Elle intègre une carte électronique embarquant des fonctionnalités de maintenance, des boutons de commande du process et des voyants (par exemple à base de LED). Elle s'accroche sur le corps 10 de façon totalement étanche vis-à-vis de la partie arrière du corps 10 où se font les connexions fluidiques. Sur cet adaptateur selon l'invention, l'opérateur voulant faire une déconnexion doit tout d'abord mettre le process hors cycle (par sécurité), il tourne ensuite d'un quart de tour les pions 15 intégrés de part et d'autre de l'adaptateur 1 formant poignée. Il peut ensuite effectuer la déconnexion fluidique puis la séparation du connecteur 21 électrique.

Le liquide de frein étant corrosif, il est préférable d'utiliser un connecteur 21 étanche que l'on déconnecte séparément. L'opérateur peut ensuite faire les opérations de maintenance qu'il souhaite (changement de l'adaptateur 1, de l'interface 19, des joints à l'intérieur des vannes embarquées dans l'adaptateur 1....). Il effectue les opérations décrites ci-dessus dans l'ordre inverse pour le remontage de l'adaptateur 1.

Sans ce type de système, l'opérateur devrait démonter toute la gaine 4, vidanger les flexibles pour faire les opérations de maintenance. A la remise en service, il devrait purger les lignes fluidiques, en particulier l'alimentation en liquide de frein 2 pour chasser l'air ainsi que vérifier les systèmes de sécurité liés à la gaine 4 (anti-arrachement) en plus du remontage de ceux-ci.

Dans un autre exemple de réalisation de l'invention, l'adaptateur 1 est dédié au remplissage de fluide caloporteur afin de remplir une diversité de radiateurs à fluide caloporteur par batch. Au lieu d'utiliser des bagues adaptatrices à placer sur les radiateurs, que l'opérateur monte/démonte à chaque fois sur certains types de radiateur pour assurer la compatibilité mécanique avec l'adaptateur 1, il suffit d'effectuer un changement d'adaptateur 1 en montant celui dédié à ce type de radiateur. L'opérateur gagne du temps, évite l'opération répétitive consistant à mettre et enlever la bague adaptatrice à chaque cycle et évite des problèmes comme des défauts d'étanchéité entre la pièce adaptatrice 1 et le circuit fluidique 3.

Suivant un autre exemple non limitatif de mise en œuvre de l'invention, l'adaptateur 1 est dédié au test étanchéité d'un circuit fluidique 3 au moyen d'un gaz. Dans ce cas, nous avons un seul conduit pour remplir le circuit fluidique 3 avec un gaz 2 de test. Un capteur est intégré à l'adaptateur 1 afin de mesurer la pression en début et en fin de test. Ainsi, la mesure est faite au plus proche du circuit et la mesure de fuite est d'autant plus fiable. En fonction de la nature du gaz de test, un deuxième conduit de récupération pour rejeter le gaz à l'extérieur peut être ajouté. Le but est généralement de ne pas perturber une mesure suite au rejet du gaz du test précédent.

En complément de ces descriptions, il faut noter que l'adaptateur 1, les éléments de liaison et d'assemblage rapide 12, 12', 28, 28', 14, 15 et les équipements hydrauliques intégrés doivent être dimensionné en fonction des conditions d'utilisation (pression, température, nature du/des fluides...). En effet, l'adaptateur 1 est porteur des différents équipements.

Il est rappelé que la présente description est donnée à titre d'exemple non limitatif de l'invention. Ainsi, l'invention ne se limite pas à un adaptateur 1 destiné à une application au secteur automobile. L'adaptateur selon l'invention trouve également une application à tous les secteurs nécessitant des outils de transfert de fluide, notamment dans le secteur de l'énergie pour le remplissage des pompes à chaleur, des radiateurs à fluide caloporteur.

## Revendications

1. Adaptateur (1) de remplissage d'un fluide (2) d'un circuit fluidique (3), destiné à être connecté d'une part audit circuit fluidique (3) et d'autre part à une machine de remplissage (5) par une gaine (4) comprenant au moins un conduit d'alimentation (6) en fluide (2) relié à la machine de remplissage (5) et au moins un conduit d'alimentation pour le pilotage (7) relié à une source d'alimentation en énergie pour le pilotage, l'adaptateur (1) comprenant au moins un conduit de transfert (6') de fluide (2) destiné à être connecté au conduit d'alimentation (6), et au moins un conduit de pilotage (7') d'un ou plusieurs organes de l'adaptateur (1), notamment un ou plusieurs organes de régulation du débit de fluide (2), destiné à être connecté au conduit d'alimentation pour le pilotage (7),
dans lequel :
- l'adaptateur (1) comprend une première partie (9) apte à être raccordée à la gaine (4) et une deuxième partie (10), distincte de la première partie (9), apte à être raccordée sur le circuit fluidique (3), et des moyens d'assemblage (14, 15) des première et deuxième parties (9, 10),
- les première (9) et deuxième (10) parties comprennent respectivement un premier (12, 28) et un deuxième (12', 28') ensembles de connexions, aptes à être connectés en sorte d'assurer la continuité fluidique en fonctionnement c'est-à-dire l'adaptateur (1) connecté à la machine de remplissage (5), d'une part des conduits d'alimentation(6) et de transfert (6') et d'autre part des conduits d'alimentation de pilotage (7) et de pilotage (7'), et aptes à être déconnectés en sorte d'assurer, lorsque la deuxième partie (10) est déconnectée de la première partie (9) tel que lors de phases de maintenance, la séparation fluidique d'une part des conduits d'alimentation (6) et de transfert (6') et d'autre part des conduits d'alimentation de pilotage (7) et de pilotage (7'),
- lesdits moyens d'assemblage (14, 15) sont aptes à être assemblés en sorte d'assurer soit la connexion entre les première et deuxième parties (9, 10) et simultanément la continuité fluidique entre les premier (12, 28) et deuxième (12' 28') ensembles de connexion, soit la déconnexion entre les première et deuxième parties (9, 10) et simultanément l'isolement fluidique entre les premier (12, 28) et deuxième (12', 28') ensembles de connexion,
- les moyens d'assemblage (15, 14) comprennent au moins un réceptacle (14) solidaire de la deuxième partie (10) et au moins un pion (15) solidaire de la première partie (9), le pion (15) étant apte à se positionner dans le réceptacle (14) et à être actionné en sorte d'assurer soit la connexion entre les première et deuxième parties (9, 10) et simultanément la continuité fluidique entre les premier (12, 28) et deuxième (12' 28') ensembles de connexion, soit la déconnexion entre les première et deuxième parties (9, 10) et simultanément l'isolement fluidique entre les premier (12, 28) et deuxième (12' 28') ensembles de connexion, et
- le pion (15) est relié :
• à un moyen de type vanne (24) placé sur le conduit d'alimentation (6) en fluide (2) de sorte que l'actionnement du pion (15) dans le réceptacle (14) entraîne l'ouverture ou la fermeture du moyen de type vanne (24), ou
• à un moyen de type vanne (24) placé sur le conduit d'alimentation de pilotage (7) de sorte que l'actionnement du pion (15) dans le réceptacle (14) entraîne l'ouverture ou la fermeture du moyen de type vanne (24), le fluide de pilotage étant un fluide de pilotage pneumatique, ou
• à un moyen d'interruption (24) électrique placé sur le conduit d'alimentation de pilotage (7) de sorte que l'actionnement du pion (15) dans le réceptacle (14) entraîne l'ouverture ou la fermeture du moyen d'interruption (24), l'énergie pour le pilotage étant électrique,
le pion (15) et le réceptacle (14) étant aptes à permettre un assemblage par verrouillage de type quart de tour dudit pion (15) dans ledit réceptacle (14),
**caractérisé en ce que** le pion (15) est relié au moyen de type vanne ou au moyen d'interruption (24) en sorte que le verrouillage par quart de tour du pion (15) dans le réceptacle (14) entraîne l'ouverture du moyen de type vanne ou du moyen d'interruption (24) et le déverrouillage par quart de tour inverse du pion (15) dans le réceptacle (14) entraîne la fermeture du moyen de type vanne ou du moyen d'interruption (24).

2. Adaptateur (1) selon la revendication 1, **caractérisé en ce que** le pion (15) présente un axe principal et comprend au moins un méplat (16), de préférence deux méplats (16) parallèles situés symétriquement de part et d'autre de son axe principal, et **en ce que** le réceptacle (14) comprend un passage (17) formé selon une direction d'insertion (d) et débouchant dans une réserve cylindrique (18), en sorte de permettre l'introduction du pion (15) dans la réserve cylindrique (18) par passage aller du ou des méplats (16) dans le passage (17) parallèlement à la direction d'insertion (d) jusqu'à la réserve cylindrique (18), et en sorte de permettre le verrouillage du pion (15) dans la réserve cylindrique (18) par rotation du pion (15) d'un quart de tour pour amener le ou les méplats perpendiculairement à la direction d'insertion (d) et empêcher le passage retour du ou des méplats (16) dans le passage (17).

3. Adaptateur (1) selon l'une quelconque des revendications 1 ou 2, **caractérisé en ce que** l'assemblage des première et deuxième parties (9, 10) par les moyens d'assemblage (14) est apte à être réalisé selon une direction d'assemblage (d), **en ce que** le premier (12, 28) et le deuxième (12', 28') ensembles de connexions comprennent respectivement deux premiers (12, 28) et deux deuxièmes (12', 28') points de connexion distants, et **en ce que** les deux premiers (12, 28) et/ou deuxièmes (12', 28') points de connexion sont décalés dans la direction d'assemblage (d) en sorte que l'étanchéité de chacun des deux premiers point de connexion (12, 28) et chacun des deux deuxièmes points de connexion (12', 28') correspondants soit réalisée successivement au cours de la course d'assemblage dans la direction d'assemblage (d).

4. Adaptateur (1) selon l'une quelconque des revendications 1 à 3, la gaine (4) comprenant au moins un faisceau d'alimentation électrique (8) relié à une source d'alimentation électrique, **caractérisé en ce qu'**il comprend une interface (19) de contrôle et de commande et au moins un faisceau de connexion électrique (8') relié à ladite interface (19) et destiné à être connecté au faisceau d'alimentation électrique (8).

5. Adaptateur (1) selon la revendication 4, **caractérisé en ce que** l'interface (19) est placée sur la deuxième partie (10) et connectée à celle-ci au moyen d'une liaison mécanique (20) et d'une connexion électrique rapide (27), en sorte d'être facilement interchangeable.

6. Adaptateur (1) selon l'une quelconque des revendications 4 et 5, **caractérisé en ce que** l'interface (19) comprend au moins un bouton poussoir marche/arrêt (191, 192), et un compteur (193) du nombre de mise en marche/arrêt.

7. Adaptateur (1) selon l'une quelconque des revendications 1 à 6, **caractérisé en ce que** la deuxième partie (10) comprend un module d'accrochage (22) apte à être raccordé au circuit fluidique (3).

8. Adaptateur (1) selon l'une quelconque des revendications 4 à 6 et selon la revendication 7, **caractérisé en ce que** l'interface (19) comprend un dispositif (23) de contrôle de la présence du module (22) raccordé sur la deuxième partie (10).

9. Adaptateur (1) selon la revendication 8, **caractérisé en ce qu'**au moins un organe de régulation du débit de fluide (2) est disposé dans le module d'accrochage (22) de l'adaptateur (1).

10. Adaptateur (1) selon l'une quelconque des revendications 1 à 9, **caractérisé en ce que** les organes de l'adaptateur (1) comprennent au moins un organe de régulation du débit de fluide (2) à commande pneumatique, tel qu'une vanne ou un clapet pneumatique, et/ou au moins un organe de régulation du débit de fluide (2) à commande électrique, tel qu'une vanne ou un clapet électrique, et **en ce que** le conduit de pilotage (7') est un conduit de pilotage pneumatique (7') destiné à être connecté à un conduit d'alimentation en fluide de pilotage (7) pneumatique relié à une source d'alimentation en fluide de pilotage pneumatique, ou un faisceau de pilotage électrique (7') destiné à être connecté à un conduit d'alimentation pour le pilotage (7) de type faisceau électrique relié à une source d'alimentation électrique.

## Patentansprüche

1. Adapter (1) zum Befüllen eines Fluids (2) eines Fluidkreises (3), der vorgesehen ist, einerseits an den Fluidkreis (3) und andererseits an eine Befüllungsmaschine (2) über eine Umhüllung (4) verbunden zu werden, die mindestens eine Leitung (6) zur Fluidversorgung (2), die an die Befüllungsmaschine (5) angeschlossen ist, und mindestens eine Versorgungsleitung (7) für die Steuerung, die an eine Energieversorgungsquelle angeschlossen ist, umfasst, wobei der Adapter (1) mindestens eine Leitung (6') zur Weitergabe des Fluids (2), die vorgesehen ist, mit der Versorgungsleitung (6) verbunden zu werden, und mindestens eine Steuerleitung (7') für ein oder mehrere Elemente des Adapters (1), insbesondere ein oder mehrere Elemente zum Regulieren des Durchflusses des Fluids (2), die vorgesehen ist, mit der Versorgungsleitung (7) für die Steuerung verbunden zu werden, umfasst,
bei dem:
- der Adapter (1) ein erstes Teil (9), das geeignet ist, an die Umhüllung (4) angeschlossen zu werden, und ein zweites Teil (10), unterschiedlich zum ersten Teil (9), das geeignet ist, an den Fluidkreis (3) angeschlossen zu werden, und Mittel (14, 15) zum Zusammenfügen des ersten und zweiten Teils (9, 10) umfasst,
- das erste (9) und zweite (10) Teil jeweils eine erste (12, 28) und eine zweite (12', 28') Verbindungbaugruppe aufweisen, die geeignet sind, einerseits mit der Versorgungsleitung (6) und der Weitergabeleitung (6') und andererseits mit der Versorgungsleitung (7) für die Steuerung und der Steuerleitung (7') verbunden zu werden, um die Fluidkontinuität im Betrieb, d. h. bei mit der Befüllungsmaschine (5) verbundenem Adapter (1), sicherzustellen, und die geeignet sind, getrennt zu werden, um die Fluidtrennung einerseits der Versorgungsleitung (6) und der Weitergabeleitung (6') und andererseits der Versorgungsleitung (7) für die Steuerung und der Steuerleitung (7') sicherzustellen, wenn das zweite Teil (10) von dem ersten Teil (9) getrennt ist, wie bei Wartungsphasen,
- die Mittel zum Zusammenfügen (14, 15) geeignet sind, zusammengesetzt zu werden, um sei es die Verbindung zwischen dem ersten und zweiten Teil (9, 10) und gleichzeitig die Fluidkontinuität zwischen der ersten (12, 28) und zweiten (12', 28') Verbindungsbaugruppe, sei es die Trennung zwischen dem ersten und zweiten Teil (9, 10) und gleichzeitig die Fluidisolierung zwischen der ersten (12, 28) und zweiten (12', 28') Verbindungsbaugruppe sicherzustellen,
- die Mittel zum Zusammenfügen (15, 14) mindestens ein mit dem zweiten Teil (10) verbundenes Aufnahmeteil (14) und mindestens einen mit dem ersten Teil verbundenen Zapfen (15) aufweisen, wobei der Zapfen (15) geeignet ist, sich in dem Aufnahmeteil (14) zu positionieren und betätigt zu werden, um sei es die Verbindung zwischen dem ersten und zweiten Teil (9, 10) und gleichzeitig die Fluidkontinuität zwischen der ersten (12, 28) und zweiten (12', 28') Verbindungsbaugruppe, sei es die Trennung zwischen dem ersten und zweiten Teil (9, 10) und gleichzeitig die Fluidisolierung zwischen der ersten (12, 28) und zweiten (12', 28') Verbindungsbaugruppe sicherzustellen, und
- der Zapfen (15) angeschlossen ist:
• an ein Mittel nach Art eines Ventils (24), das an der Versorgungsleitung (7) für die Steuerung liegt, derart, dass die Betätigung des Zapfens (15) in dem Aufnahmeteil (14) das Öffnen oder Schließen des Mittel nach Art eines Ventils (24) mit sich bringt, wobei das Steuerfluid ein pneumatisches Steuerfluid ist, oder
• an ein elektrisches Unterbrechungsmittel (24), das an der Versorgungsleitung (7) für die Steuerung liegt, derart, dass die Betätigung des Zapfens (15) in dem Aufnahmeteil (14) das Öffnen oder Schließen des Unterbrechungsmittels (24) mit sich bringt, wobei die Energie für die Steuerung elektrisch ist,
der Zapfen (15) und das Aufnahmeteil (14) geeignet sind, ein Zusammenfügen durch eine Verriegelung nach Art einer Viertelumdrehung des Zapfens (15) in dem Aufnahmeteil (14) zu ermöglichen,
**dadurch gekennzeichnet, dass** der Zapfen (15) an das Mittel nach Art eines Ventils oder an das Unterbrechungsmittel (24) angeschlossen ist, damit die Verriegelung durch Viertelumdrehung des Zapfens (15) in dem Aufnahmeteil (14) das Öffnen des Mittels nach Art eines Ventils oder des Unterbrechungsmittels (24) mit sich bringt und die Entriegelung durch eine umgekehrte Viertelumdrehung des Zapfens (15) in dem Aufnahmeteil (14) das Schließen des Mittels nach Art eines Ventils oder des Unterbrechungsmittels (24) mit sich bringt.

2. Adapter (1) nach Anspruch 1, **dadurch gekennzeichnet, dass** der Zapfen (15) eine Hauptachse aufweist und mindestens eine Abflachung (16), vorzugsweise zwei parallele Abflachungen umfasst, die symmetrisch beidseitig seiner Hauptachse liegen, und dass das Aufnahmeteil (14) einen Durchgang (17), der gemäß einer Einführungsrichtung (d) gebildet ist und in einen zylindrischen Lagerraum (18) mündet, damit die Einführung des Zapfens (15) in den zylindrischen Lagerraum (18) durch Einführen der Abflachung(en) (16) in den Durchgang (17) parallel zur Einführungsrichtung (b) bis zu dem zylindrischen Lagerraum (18) ermöglicht wird, und damit die Verriegelung des Zapfens (15) in dem zylindrischen Lagerraum (18) durch Drehung des Zapfens (15) um eine Viertelumdrehung ermöglicht wird, um die Abflachung(en) senkrecht zur Einführungsrichtung (b) zu überführen und den Übergang der Abflachungen (16) zurück in den Durchgang (10) zu verhindern.

3. Adapter (1) nach einem beliebigen der Ansprüche 1 oder 2, **dadurch gekennzeichnet, dass** das Zusammenfügen des ersten und zweiten Teils (9, 10) durch die Mittel (14) zum Zusammenfügen gemäß einer Zusammenfügungsrichtung (b) realisiert werden kann, dass die erste (12, 28) und die zweite (12', 28') Verbindungsbaugruppe jeweils zwei erste (12, 28) und zwei zweite (12', 28') beabstandete Verbindungspunkte umfassen und dass die zwei ersten (12, 28) und/oder zweiten (12', 28') Verbindungspunkte in der Zusammenfügungsrichtung (d) versetzt sind, damit die Dichtigkeit jedes der entsprechenden zwei ersten Verbindungspunkte (12, 28) und jedes der entsprechenden zwei zweiten Verbindungspunkte (12', 28') aufeinanderfolgend während des Zusammenfügungsweges in der Zusammenfügungsrichtung (d) realisiert wird.

4. Adapter (1) nach einem beliebigen der Ansprüche 1 bis 3, wobei die Umhüllung (4) mindestens einen elektrischen Versorgungsstrang (8) der umfasst, der an eine elektrische Versorgungsquelle angeschlossen ist, **dadurch gekennzeichnet, dass** er eine Schnittstelle (19) zur Überwachung und Steuerung und mindestens einen elektrischen Versorgungsstrang (8'), der an die Schnittstelle (19) angeschlossen ist und vorgesehen ist, mit dem elektrischen Versorgungstrang (8) verbunden zu werden, umfasst.

5. Adapter (1) nach Anspruch 4, **dadurch gekennzeichnet, dass** die Schnittstelle (19) an dem zweiten Teil (10) angeordnet ist und mit diesem mittels einer mechanischen Verbindung (20) und einer elektrischen Schnellverbindung (27) verbunden ist, damit sie schnell auswechselbar ist.

6. Adapter (1) nach einem beliebigen der Ansprüche 4 und 5, **dadurch gekennzeichnet, dass** die Schnittstelle (19) mindestens eine Ein/Aus Drucktaste (191, 192) und einen Zähler (193) der Anzahl von Ein/Aus Schaltungen umfasst.

7. Adapter (1) nach einem beliebigen der Ansprüche 1 bis 6, **dadurch gekennzeichnet, dass** das zweite Teil (10) ein Befestigungsmodul (22) umfasst, das geeignet ist, an den Fluidkreis (3) angeschlossen zu werden.

8. Adapter (1) nach einem beliebigen der Ansprüche 4 bis 6 und nach Anspruch 7, **dadurch gekennzeichnet, dass** die Schnittstelle (19) eine Vorrichtung (23) zur Überprüfung des Vorhandenseins des an dem zweiten Teil (10) befestigten Moduls (22) umfasst.

9. Adapter (1) nach Anspruch 8, **dadurch gekennzeichnet, dass** mindestens ein Element zum Regulieren des Fluiddurchflusses (2) in dem Befestigungsmodul (22) des Adapters (1) angeordnet ist.

10. Adapter (1) nach einem beliebigen der Ansprüche 1 bis 9, **dadurch gekennzeichnet, dass** die Elemente des Adapters (1) mindestens ein Element zum Regulieren des Fluiddurchflusses (2) mit pneumatischer Steuerung, wie ein Ventil oder eine pneumatische Klappe, und/oder mindestens ein Element zum Regulieren des Fluiddurchflusses (2) mit elektrischer Steuerung, wie ein Ventil oder eine elektrische Klappe, umfassen und dass die Steuerleitung (7') eine Leitung (7') zur pneumatischen Steuerung ist, die vorgesehen ist, mit einer Versorgungsleitung (7) mit pneumatischen Steuerfluid, die an eine pneumatische Steuerfluid-Versorgungsquelle angeschlossen ist, verbunden zu werden, oder ein elektrischer Steuerstrang (7') ist, der vorgesehen ist, mit einer Versorgungsleitung (7) für die Steuerung nach Art eines elektrischen Stranges, der an eine elektrische Versorgungquelle angeschlossen ist, verbunden zu werden.

## Claims

1. Adaptor (1) for filling a fluid (2) of a fluid circuit (3) intended to be connected, on the one hand, to said fluid circuit (3) and, on the other hand, to a filling machine (5) by a casing (4) comprising at least one fluid (2) supply pipe (6) connected to the filling machine (5) and at least one supply pipe for the control system (7) connected to an energy supply source for the control system, the adaptor (1) comprising at least one fluid (2) transfer pipe (6') intended to be connected to the supply pipe (6), and at least one control system pipe (7') of one or more elements of the adaptor (1), in particular one or more elements for regulating the fluid output (2), intended to be connected to the supply pipe for the control system (7),
in which:
- the adaptor (1) comprises a first part (9) able to be connected to the casing (4) and a second part (10), separate from the first part (9), able to be connected to the fluid circuit (3), and assembly means (14, 15) of the first and second parts (9, 10),
- the first (9) and second (10) parts comprise respectively a first (12, 28) and a second (12', 28') connection assemblies, able to be connected so as to ensure fluid continuity during operation, i.e. the adaptor (1) connected to the filling machine (5), on the one hand, of supply (6) and transfer (6') pipes, and on the other hand, of control system supply (7) and control system (7') pipes, and able to be disconnected in order to ensure, when the second part (10) is disconnected from the first part (9), such as during maintenance phases, the fluid separation, on the one hand, of the supply (6) and transfer (6') pipes and, on the other hand, of control system supply (7) and control system (7') pipes,
- said assembly means (14, 15) are able to be assembled so as to ensure either the connection between the first and second parts (9, 10) and, simultaneously, the fluid continuity between the first (12, 28) and the second (12', 28') connection assemblies, or disconnection between the first and second parts (9, 10) and, simultaneously, the fluid isolation between the first (12, 28) and second (12', 28') connection assemblies,
- the assembly means (15, 14) comprise at least one receptacle (14) which is integral with the second part (10) and at least one peg (15) which is integral with the first part (9), the peg (15) being able to be positioned in the receptacle (14) and to be activated so as to ensure either the connection between the first and second parts (9, 10) and, simultaneously, the fluid continuity between the first (12, 28) and second (12', 28') connection assemblies, or disconnection between the first and second parts (9, 10) and, simultaneously, the fluid isolation between the first (12, 28) and second (12', 28') connection assemblies, and
- the peg (15) is connected:
- to a valve-type means (24) placed on the fluid (2) supply pipe (6) so that actuation of the peg (15) in the receptacle (14) drives opening or closing of the valve-type means (24), or
- to a valve-type means (24) placed on the control system supply pipe (7) so that actuation of the peg (15) in the receptacle (14) drives opening or closing of the valve-type means (24), the control system fluid being a pneumatic control system fluid, or
- to an electrical interruption means (24) placed on the control system supply pipe (7) so that actuation of the peg (15) in the receptacle (14) drives opening or closing of the interruption means (24), the energy for the control system being electrical,
the peg (15) and the receptacle (14) being able to allow assembly by locking of the quarter-turn type of said peg (15) in said receptacle (14),
**characterised in that** the peg (15) is connected to the valve-type means or to the interruption means (24) so that the quarter turn-locking of the peg (15) in the receptacle (14) drives opening of the valve-type means or of the interruption means (24) and unlocking by inverse quarter turn of the peg (15) in the receptacle (14) drives closing of the valve-type means or of the interruption means (24).

2. Adaptor (1) according to claim 1, **characterised in that** the peg (15) has a main axis and comprises at least one flat surface (16), preferably two flat surfaces (16) which are parallel and situated symmetrically on both sides of its main axis, and **in that** the receptacle (14) comprises a passage (17) formed according to an insertion direction (d) and opening in a cylindrical reserve (18) so as to allow introduction of the peg (15) into the cylindrical reserve (18) by passage from the flat surface or surfaces (16) in the passage (17) parallel to the insertion direction (d) up to the cylindrical reserve (18), and so as to allow locking of the peg (15) in the cylindrical reserve (18) by rotation of the peg (15) by a quarter turn in order to bring the flat surface or surfaces perpendicular to the insertion direction (d) and to prevent return passage of the flat surface or surfaces (16) in the passage (17).

3. Adaptor (1) according to any of the claims 1 or 2, **characterised in that** assembly of the first and second parts (9, 10) by the assembly means (14) is able to be produced according to an assembly direction (d), **in that** the first (12, 28) and the second (12', 28') connection assemblies comprise respectively two first (12, 28) and two second (12', 28') separate connection points, and **in that** the two first (12, 28) and/or second (12', 28') connection points are offset in the assembly direction (d) so that the impermeability of each of the two first connection points (12, 28) and each of the two corresponding second connection points (12', 28') are produced successively in the course of the assembly course in the assembly direction (d).

4. Adaptor (1) according to any of the claims 1 to 3, the casing (4) comprising at least one electrical supply bundle (8) connected to an electrical supply source, **characterised in that** it comprises a testing and control interface (19) and at least one electrical connection bundle (8') connected to said interface (19) and intended to be connected to the electrical supply bundle (8).

5. Adaptor (1) according to claim 4, **characterised in that** the interface (19) is placed on the second part (10) and connected to the latter by means of a mechanical link (20) and a rapid electrical connection (27), so as to be easily interchangeable.

6. Adaptor (1) according to any of the claims 4 and 5, **characterised in that** the interface (19) comprises at least one start/stop push button (191, 192) and a counter (193) of the number of starts/ stops.

7. Adaptor (1) according to any of the claims 1 to 6, **characterised in that** the second part (10) comprises an attachment module (22) able to be connected to the fluid circuit (3).

8. Adaptor (1) according to any of the claims 4 to 6, and according to claim 7, **characterised in that** the interface (19) comprises a device (23) for testing for the presence of the module (22) connected to the second part (10).

9. Adaptor (1) according to claim 8, **characterised in that** at least one element for regulating the fluid output (10) is disposed in the attachment module (22) of the adaptor (1).

10. Adaptor (1) according to any of the claims 1 to 9, **characterised in that** the elements of the adaptor (1) comprise at least one element for regulating the fluid output (2) by pneumatic control, such as a valve or a pneumatic flap, and/or at least one element for regulating the fluid output (2) by electrical control, such as a valve or electrical flap, and **in that** the control system pipe (7') is a pneumatic control system pipe (7') intended to be connected to a supply pipe with pneumatic control system fluid (7) connected to a supply source with pneumatic control system fluid, or an electrical control system bundle (7') intended to be connected to a supply pipe for the electrical bundle type control system (7) connected to an electrical supply source.
